# EUROPEAN PATENT APPLICATION

(11) **EP 0 818 351 A1**
(43) Date of publication of application: **14.01.1998**
(21) Application number: 97610030.5
(22) Date of filing: 14.07.1997
(51) Int. Cl.: B60P 3/055, B60P 1/44

(54) **A platform lorry with a lowerable floor section**

(30) Priority: 12.07.1996 DK 78196
(71) Applicant: Hansen, Poul Erik, 8240 Risskov (DK)
(72) Inventor: Hansen, Poul Erik, 8240 Risskov (DK)
(74) Representative: Skoett-Jensen, Knud

(57) **Abstract**

For unloading of pieces of goods from platform trucks it is known to use a lowerable tailboard, which can be controlled for lowering of goods supplied from the platform, and it has even been suggested to sectionize the platform itself, with the possibility of lowering the single sections outside the central main carrier beam of the platform. With the invention these sections may extend to above the main carrier beam, as they are arranged in a horizontally extensible manner for subsequent lowering. An existing main carrier beam may be used without having to be modified. With the invention the platform is divided in four sections (12,14) which are individually lowerable, whereby there is no need for extra space behind the truck.

## Description

The present invention relates to a platform truck designed with means for facilitating loading and particularly unloading of goods, e.g. bottle boxes or pallets with such boxes or any other relevant goods. It has become a widespread practice to provide platform trucks with loading tailboards, which greatly facilitates both loading and unloading, these boards being foldable to a rearwardly projecting position in which they form carrier platforms that can be lowered and raised between the body level of the truck and the street level. As the lowering/raising can thus be effected automatically, the rest will be a matter of horizontal movement of the goods on the platform and on the street, respectively, and for that purpose there are other useful auxiliaries.

In many cases it is particularly the unloading for which these tailboards are important, as the trucks are often loaded at places accomodating external loading equipment such as fork trucks.

However, there are trucks with which it is unpractical to rely on an unloading by means of the said tailboard or on loading through the rear end of the body, typically trucks for carrying bottle boxes. Here it is customary that the trucks are made with a sheltered body that can be opened in the lateral sides for both loading and unloading, whereby the loading can be effected with palletized, large groups of goods, while the detailed unloading can be effected by handling smaller groups, e.g. single bottle boxes, preferably purely manually.

Attempts have been made for providing truck mounted hoisting devices enabling a hoisting down of smaller groups of articles, e.g. piles of bottle boxes, but in practice it could be very desirable to unload larger units such as entire pallet loads over the sides of the carrier platform.

It has already been proposed that for the latter purpose it is possible to provide for a sectioning of the platform itself such that the sections are directly lowerable to the street level. However, the underlying carrier chassis in the form of a longitudinal beam or main beam and cross beams projecting therefrom, together with the presence of the rear wheels, will obstruct a free lowering of certain platform sections, so it has been actual either to accept the resulting limitations given thereby, with an associated relatively bad utilization of the platform area for lowering purposes, or to intervene radically into the basic construction of the chassis structure, which is very costly.

With the present invention it has been realised that at least the main beam is not necessarily an obstruction for a lowering of a platform section projecting inwardly to the middle of the main beam, if care is taken to initiate the lowering with an outwardly directed lateral displacement of the platform section to a position in which it is free of the main beam and thus lowerable without obstruction therefrom. This will normally imply that the truck will temporarily appear with a total width which is larger than permissible according to traffic acts, but this is no problem beause the situation should only occur during full stop. Thus, the lowerable platform sections may reach inwardly to the middle of the main beam or even - for monolateral unloading - to somewhat beyond that middle, whereby the platform area may be utilized at maximum without constructionally changing the main beam structure.

Regarding the cross beams, these will not either present any major problem inasfar as the said lateral displaceability of the platform sections makes it relatively easy to modify the cross beams into telescopic units comprising maintained, shortened original beam bits, which cooperate with beam portions of the platform sections in such a manner that the latter are generally fully carrying for a given platform section during the lowering/raising thereof and are also in full carrying engagement with the remaining cross beam piece on the main beam in the relevant transportation position.

The said cross beam piece on the main beam should not necessarily be a remaining part of an original cross beam, as it will be a relatively simple operation to provide the existing main beam with new bits of cross beam.

It should be accepted that in the areas just above the rear wheels it is hardly possible to arrange for lowerable platform sections, but otherwise, with the invention, it is possible to use the remaining platform area, also above both the main beam and the cross beams, to form lowerable sections. Thus, a whole platform may be divided into only four sections, viz. the respective halves in front of and behind the rear wheel set, respectively, whereby a minimum of lowering equipment is sufficient.

In the following the invention is described in more detail with reference to the drawing, in which:
Fig. 1 is a schematic perspective view of a truck embodied according to the invention;
Figs. 2 and 3 are top views thereof in two different situations;
Fig. 4 is a view corresponding to Fig. 1 of the truck with some platform sections lowered to the ground;
Figs. 5 and 6 are more detailed plan views of a practical embodiment of a truck according to the invention, seen from the side and from above, respectively;
Figs. 7 and 8 end views thereof, with the left platform section shown in two different positions; and
Fig. 9 a corresponding, more detailed end view, shown with unloading goods placed on the lowered platform section.

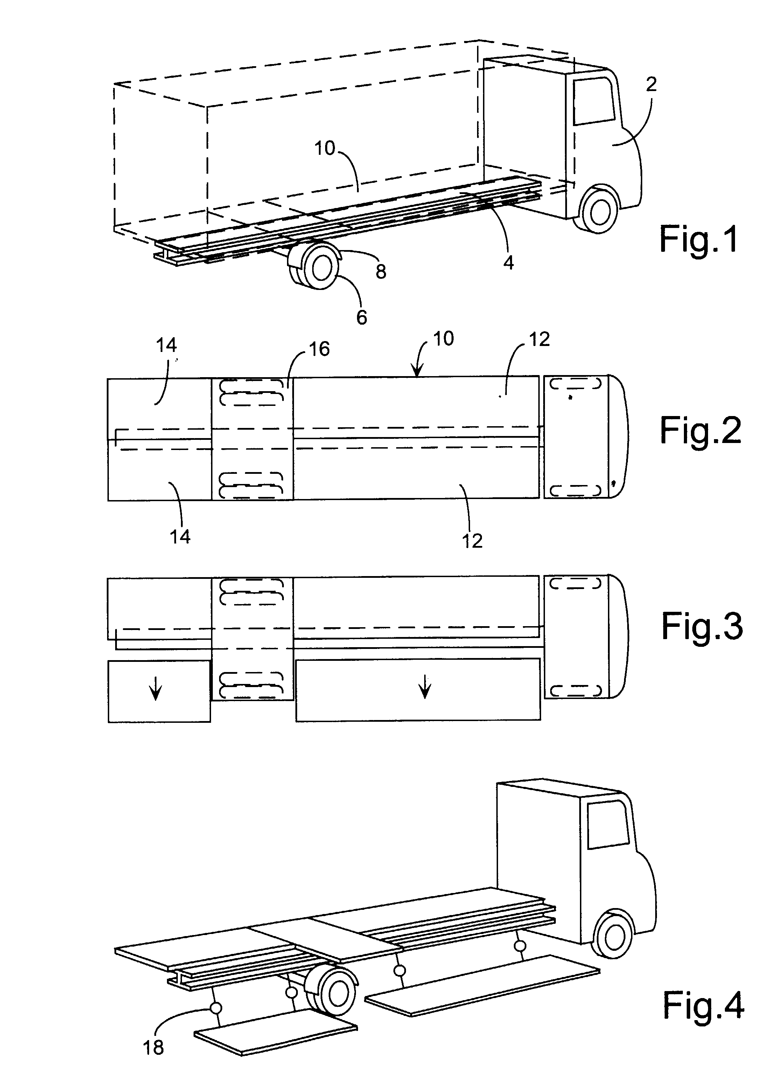

In Fig. 1, a platform truck of a generally ordinary design is shown, viz. with a front portion 2 and a main carrier beam 4 projecting rearwardly therefrom and supported by the rear truck wheels 8, equipped with splashguards 8, the carrier beam 4 constituting the main support for the platform 10 of the truck.

In Fig. 2 it is shown in more detail that the platform 10 is sectioned, viz. along the middle in respective foremost and rearmost side halves 12 and 14 with an unbroken, transverse intermediate part 16 above the area of the rear wheel set.

As shown in Fig. 3, the respective halves 12 and 14 are arranged in such a manner that they are laterally displaceable, by means not shown, to a position in which they a located outside the main beam 4, whereafter, as shown in Fig. 4, they are operable to be lowered to the ground level by means of purely schematically illustrated lowering means 18 coupled to the main beam 4.

Hereby it is possible to effect a lowering for unloading of relatively large groups of e.g. palletized goods such as bottle boxes, which, at the street level, can then be further unloaded individually or optionally groupwise by means of a simple lift cart for operation near the ground level. The platform sections may extend to the middle of the platform, such that except for the section 16 there will be left no passive platform areas, and no intervention with the main beam will be required.

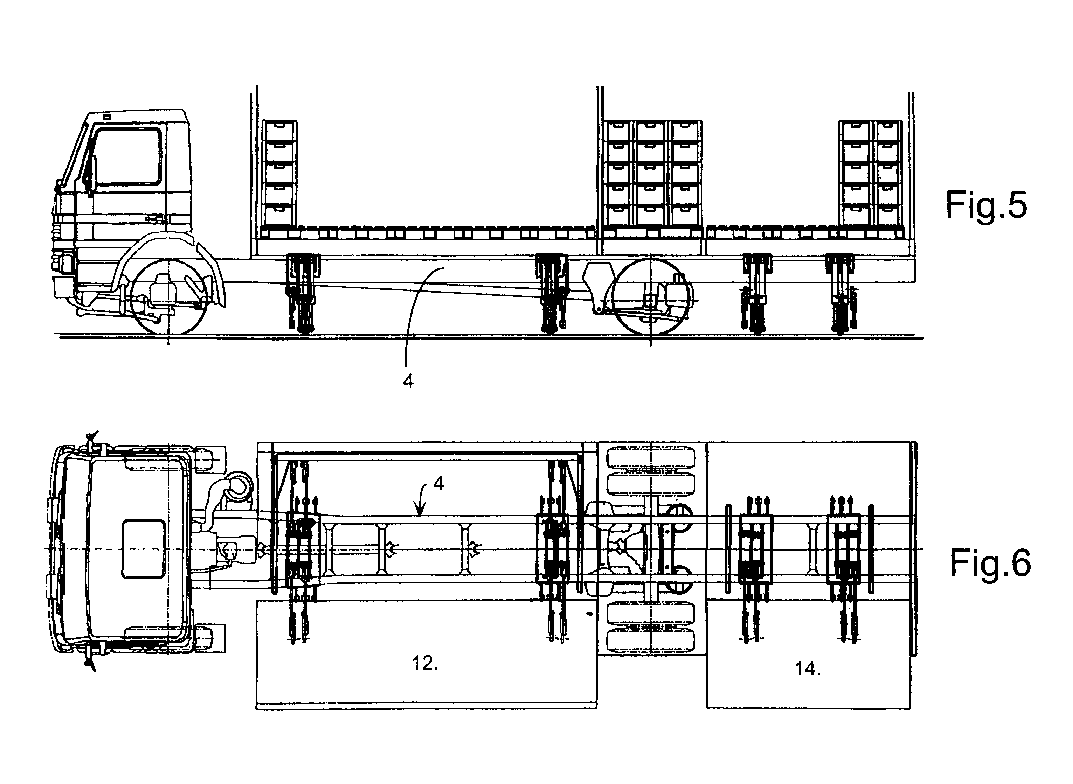

For the basic idea of the invention it is less important in which manner the platform sections 12 and 14 are controlled to carry out their lowering movement, but Figs. 5-9 examplify how this can be effected by means of hydraulically controlled moving means. At this place it is considered unnecessary to describe this in further detail, as in principle any suitable control means can be used. The said horizontal displacements can be effected by means of separate working cylinders or with the use of such a mechanical coupling with the main cylinders that these, in an initial phase of the lowering and a final phase of the raising, will automatically provoke the required displacement. The motion control means may be established solely by various additions to the main beam without any modification of the latter per se.

The truck may be provided with energy accumulating means which, en route, will collect sufficient energy in order to accomplish at least one lowering and raising cycle without assistance from the truck engine.

The invention, of course, will also comprise a truck which is provided with the discussed system solely at one side thereof, as well as a truck having the system e.g. solely at the rear end, optionally only in the 'pavement side', whereby an alternative to the known tailboards will be provided. In monolaterally operating systems, the relevant platform sections may, optionally, project somewhat beyond the middle of the platform.

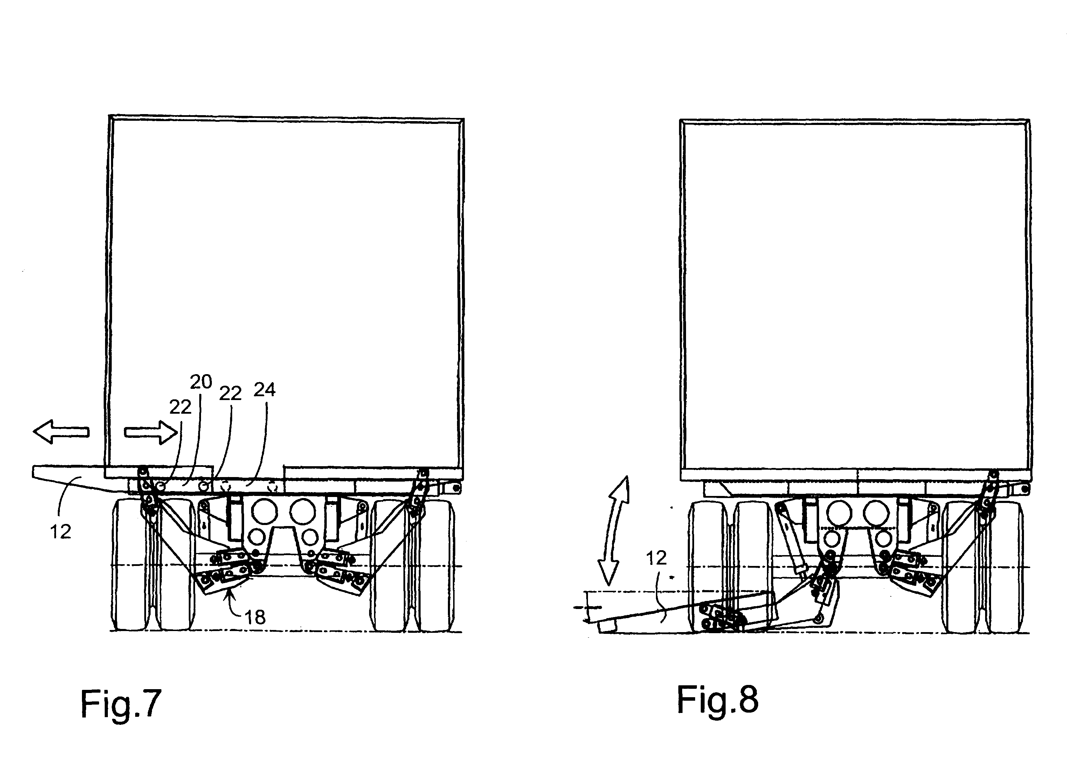

Theoretically, the truck chassis may be provided with laterally fully projecting cross beams for supporting the the platform sections, whereby these should only be fully projected prior to initial lowering. With the invention, hovever, it is a preferred possibility to make use of relatively shortly projecting cross beams, with which the platform sections are in carrying telescopic or roller engagement by means of proper beam portions; the applied lowering pivot arms may then also be in engagement with the latter beam portions so as to take over the carrying thereof, after their initial, outwardly directed displacement. In Fig. 7 it is indicated that a cross beam 20 on a platform section 12 may be provided with a pair of rollers 22 which, when displaced horizontally, can be brought from and to a carrying engagement with a fixed, short cross beam portion projecting from the main beam and conventionally being designed as a C profile which is basically suitable for cooperation with the rollers 22 as shown in dotted lines.

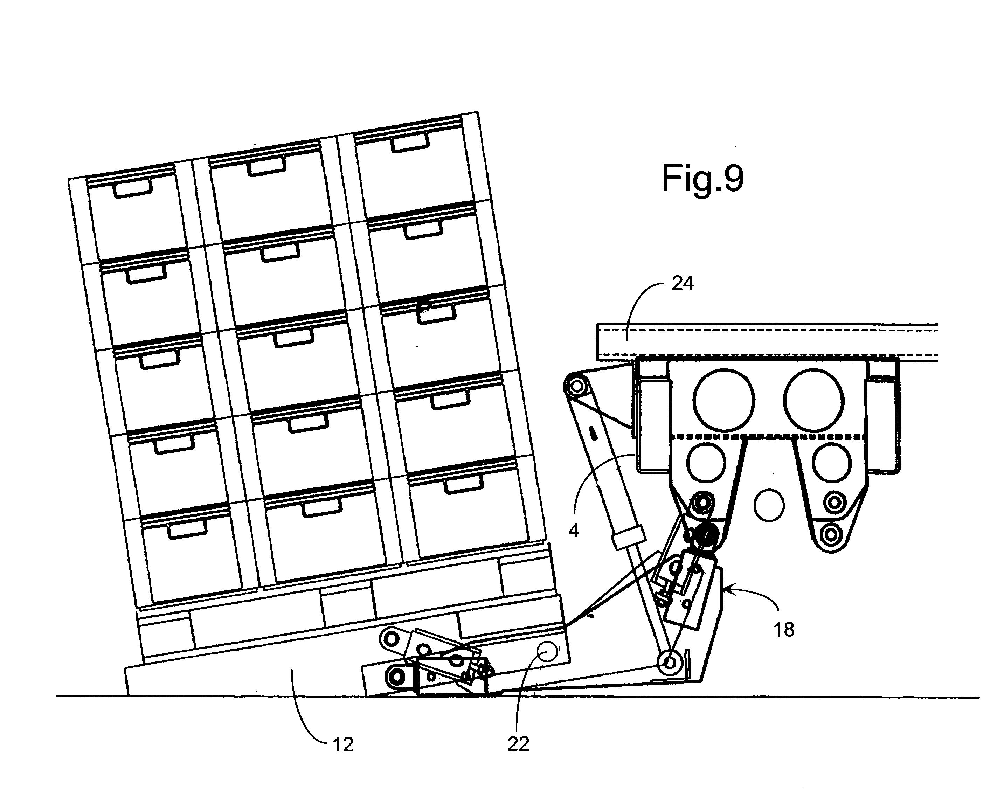

In principle, the platform sections ca be lowered to a position in which their top sides are parallel with the ground, but at the inner edge portions of the sections the beam portions and the associated lowering/raising means will require some space underneath th surface of each section, whereby these surfaces will be situated correspondingly spaced above the ground level. According to the invention, however, it is possible to arrange the system in such a manner that the platform sections as shown in Fig. 9 are lowerable to a position in which they are slanting such that their outer ends are lowered noticeably more than the inner ends. With the illustrated, associated moderate slanting of e.g. a palletized pile of bottle boxes, this pile will still be safely supported, and the outer boxes kan be brought down from a relatively small height, which will then also apply to the subsequent boxes when the slanting platform section is used as a footbridge.

## Claims

1. A platform truck for the bringing out of pieces of goods, e.g. bottle boxes, having a horizontal carrier platform with an underlying main carrier beam and with means for lowering an unloading platform from the platform level to the ground level, said unloading platform being a section of the horizontal platform itself, characterized in that the unloading platform section extends inwardly to above the main carrier beam and is horizontally displaceable between a normal platform position for forming an integrated platform portion and an unloading position, from which it is lowerable without obstruction from the main carrier beam.

2. A platform truck according to claim 1, with lowerable platform sections at both sides, characterized in that the platform sections meet each other at the longitudinal middle of the carrier platform.

3. A platform truck according to claim 1, characterized in that the unloading platform section is provided with own transverse carrier beams, which are in telescopic extensible carrying engagement with rigid cross beam portions projecting relatively shortly from the main carrier beam.

4. A platform truck according to claim 3, characterized in that the carrying connection is established by means of side rollers (22) on the cross beams of the platform section, these rollers being guided in the rigid, C-profiled cross beam portions.
